# FASCICULE DE BREVET EUROPEEN

(11) **EP 0 678 841 B1**
(45) Date de publication et mention de la délivrance du brevet: **28.10.1998**
(21) Numéro de dépôt: 95400783.7
(22) Date de dépôt: 07.04.1995
(51) Int. Cl.: G08G 5/02, G01S 13/94, G05D 1/06, G01C 21/00

(54) **Dispositif d'aide à l'atterrissage**
Landungshilfevorrichtung
Landing aid device

(30) Priorité: 15.04.1994 FR 9404521
(43) Date de publication de la demande: 25.10.1995
(73) Titulaire: SEXTANT AVIONIQUE, 92360 Meudon La Forêt (FR)
(72) Inventeur: Faivre, François, F-92402 Courbevoie Cedex (FR); Denoize, Xavier, F-92402 Courbevoie Cedex (FR)
(74) Mandataire: Benoit, Monique

(56) Documents cités:
- GB-A- 2 043 388
- GB-A- 2 165 427

## Description

La présente invention telle qu'elle est définie dans les revendications concerne un dispositif d'aide à l'atterrissage notamment en cas de mauvais temps. Elle s'applique à tous types d'aéronefs.

L'aviation commerciale à connu un développement considérable qui n'a été rendu possible que par les progrès techniques contribuant à la sécurité des vols et à la réduction relative des coûts d'exploitation. Le document GB-A-2 043 388 mentionne un tel dispositif.

En particulier, l'introduction de systèmes d'atterrissage tous temps connus sous le sigle ILS ou MLS selon les expressions anglo-saxonnes "Instrument Landing System" et Microwave Landing System" ont permis la progression des opérations d'atterrissage ou de décollage par mauvaises conditions météorologiques. Les systèmes de détection de proximité du sol ou d'anticollision ont aussi amélioré la sécurité.

Cependant, les investissements à réaliser par les aéroports pour disposer de ces moyens au sol pour des atterrissages tous temps sont très importants. De ce fait, un grand nombre d'aéroports mondiaux, y compris certains ouverts au trafic international, ne possèdent pas des dispositifs radioélectriques de guidage nécessaires à la mise en oeuvre des systèmes d'aide à l'atterrissage par mauvais temps, tels que le brouillard par exemple. En conséquence, l'aviation commerciale ne peut desservir ces aéroports lorsque les conditions météorologiques deviennent défavorables. Il peut en résulter alors des problèmes commerciaux et financiers désastreux pour les compagnies aériennes concernées.

Le but de l'invention est de permettre des atterrissages par tous types de temps sur tous les aéroports du monde grâce à des faibles moyens d'investissement nécessaires.

A cet effet, l'invention a pour objet un dispositif d'aide à l'atterrissage d'un aéronef, caractérisé en ce qu'il comprend au moins :
- une base de données comportant les signatures et les positions d'objets ;
- un capteur acquérant les signatures des objets ;
- des moyens de navigation définissant la localisation de l'aéronef ;
- des moyens de corrélation reliés à la base de données, au capteur et aux moyens de navigation, définissant les angles de sites et de gisement sous lesquels les objets sont vus par le capteur ;
- des moyens de détermination de la situation exacte de l'aéronef reliés aux moyens de navigation, au capteur et à la base de données.

L'invention a pour principaux avantages qu'elle améliore la sécurité des opérations d'atterrissage des aéronefs, qu'elle permet de renforcer la sécurité d'une chaîne primaire d'aide à l'atterrissage du type ILS ou MLS par exemple par une deuxième chaîne indépendante d'acquisitions d'informations, qu'elle s'adapte à tous les types d'aéronef et qu'elle est simple à mettre en oeuvre.

D'autres caractéristiques et avantages de l'invention apparaîtront à l'aide de la description qui suit faite à l'aide de dessins annexés qui représentent :
- la figure 1, un synoptique d'un mode de réalisation possible d'un dispositif selon l'invention ;
- la figure 2, un exemple d'application d'un dispositif selon l'invention ;
- la figure 3, un synoptique d'un autre mode de réalisation possible d'un dispositif selon l'invention.

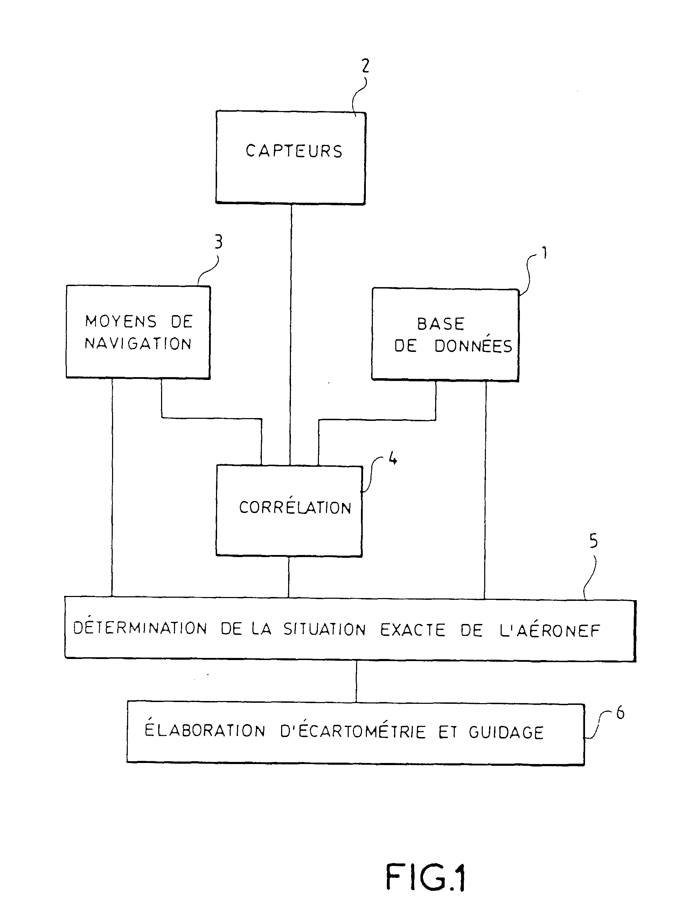

La figure 1 présente un synoptique d'un mode de réalisation possible d'un dispositif selon l'invention équipant un aéronef.

Il comporte au moins une base de données 1 contenant les signatures d'objets, correspondant chacune à au moins une caractéristique de ces objets dans une ou plusieurs bandes spectrales de capteurs 2.

Par ailleurs, la base de données contient des informations de positions de ces objets. Ces objets sont par exemple au sol, immobiles, et situés au voisinage d'une piste d'atterrissage ou d'un aéroport. Le dispositif selon l'invention peut contenir un ou plusieurs capteurs 2. A titre d'exemple un seul capteur est envisagé par la suite. Un capteur 2 est par exemple constitué du radar météorologique de l'aéronef, d'un radar à ondes millimétriques ou d'un capteur à infrarouge porté par l'aéronef. La base de données 1 contient par exemple d'autres informations que les signatures précitées. Ces informations peuvent être relatives à des seuils d'altitudes de sécurités en vol, à des procédures d'atterrissages associées par exemple à tous les aéroports du monde ou seulement à ceux susceptibles de concerner l'aéronef.

Le dispositif selon l'invention contient des moyens de navigation 3, permettant de définir grossièrement la localisation de l'aéronef. Les moyens de navigation peuvent être par exemple reliés à la base de données 1, la localisation de l'aéronef permettant de choisir dans la base de données 1 un seuil d'altitude de sécurité ou une procédure de vol correspondant à la localisation déterminée dans le cas notamment où la base de données contient les informations attendues.

La base de données 1, le capteur 2, les moyens de navigation 3 sont reliés à des moyens de corrélation 4. Les maxima de corrélation et la connaissance de la géométrie du capteur 2 permettent notamment de déterminer sous quels angles de sites et de gisements sont vus chacun des objets dont la signature est reçue par le capteur 2.

La base de données 1, les moyens de navigation 3 et les moyens de corrélation 4 sont reliés à des moyens 5 de détermination de la situation exacte de l'aéronef. La connaissance de ces angles pour plusieurs objets, dont les signatures et les informations de position sont stockées dans la base de données 1, permet de déterminer une meilleure estimation de la situation géographique exacte du capteur donc de l'aéronef. Le sens exact est à prendre ici dans le sens que l'exactitude de l'information de situation est suffisante pour engager un atterrissage en sécurité. Cette détermination de la situation exacte de l'aéronef est par exemple réalisée par une méthode de triangulation à partir de trois objets du voisinage de l'aéroport sur lequel l'aéronef doit atterrir et dont les signatures et les informations de position sont stockées dans la base de données 1.

Les moyens 5 de détermination de la situation exacte de l'aéronef sont par exemple reliés à des moyens d'élaboration d'écartométrie et de guidage de l'aéronef. La position exacte de l'aéronef étant fournie à ces moyens 6 par les moyens 5 de détermination précités, ils élaborent par exemple des informations d'écartométrie par rapport à une trajectoire théorique idéale. Puis ils élaborent des informations de guidage pour rejoindre cette trajectoire idéale, à partir des informations de position du point d'entrée de l'aéronef sur la piste d'atterrissage et des informations de procédures d'atterrissage par exemple également contenues dans la base de données 1.

Les moyens de corrélation 4, les moyens 5 de détermination de la situation exacte de l'aéronef et les moyens 6 d'élaboration d'écartométrie et de guidage sont par exemple constitués d'un même calculateur.

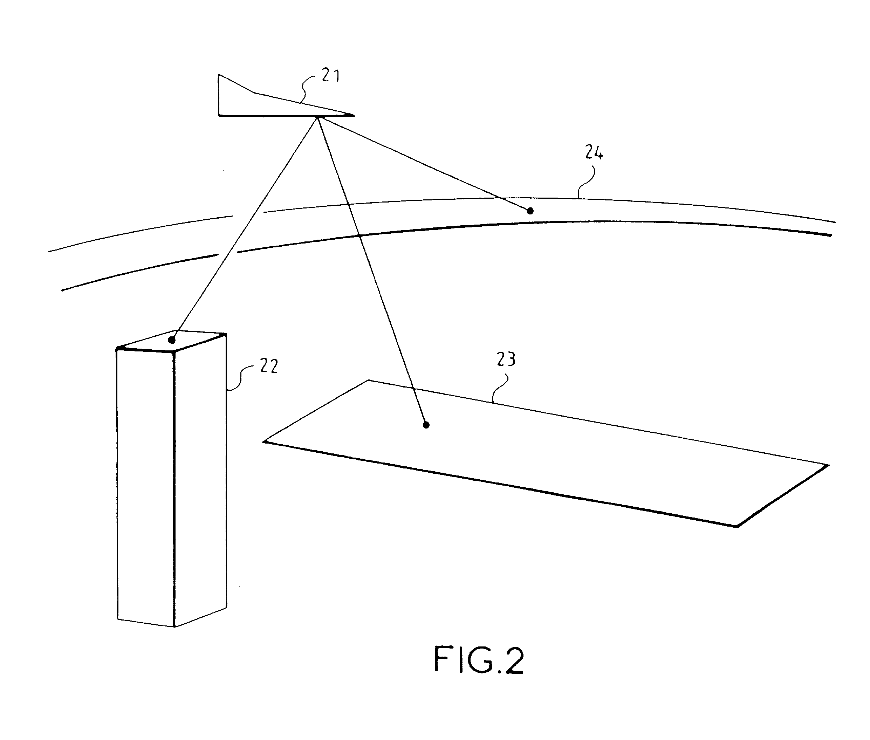

La figure 2 présente un exemple d'application d'un dispositif selon l'invention. Un aéronef 21 muni d'un tel dispositif s'approchant d'un aéroport, son ou ses capteurs 2 détectent les signatures de trois objets 21, 23, 24 qui sont par exemple une tour 22 située au voisinage de l'aéroport, une piste 23 de l'aéroport, celle d'atterrissage de l'aéronef 21 par exemple, et une autoroute 24 passant dans le voisinage de l'aéroport. Le capteur 2 ayant acquis les signatures de ces trois objets 22, 23, 24 formant trois points singuliers, ces informations sont comparées par corrélation avec celles stockées dans la base de données, puis une triangulation permet de déterminer la position exacte du capteur 2 donc de l'aéronef 21 à partir des positions exactes des objets 22, 23, 24 mémorisées dans la base de données 1.

Un capteur 2 peut être avantageusement constitué du radar de météorologie de l'aéronef 21 car ce radar est notamment présent sur tous les avions commerciaux. Un surcoût par l'emploi d'un capteur spécifique est ainsi évité.

Un capteur 2 peut aussi être constitué d'un radar à ondes millimétriques, qui sans fournir d'images présentables aux pilotes, permet cependant de récupérer des échos provenant des objets dont les signatures sont stockées dans la base de données 1.

Les objets sont de préférence choisis de façon à ce qu'il n'y ait pas de confusions possibles entre leurs signatures. Les objets peuvent être semblables d'un voisinage d'aéroport à un autre, les moyens de navigation étant en mesure de définir lors de chaque mission l'aéroport d'approche de l'aéronef.

La figure 2 montre que les objets dont les signatures et les positions sont mémorisées par la base de données 1 peuvent être des objets standards affectés à des tâches quelconques tels qu'une tour, une autoroute, un pont, une piste ou un objet de la nature par exemple. Cela à l'avantage d'être économique car ne nécessitant pas d'infrastructure particulière. Cela évite notamment des coûts de réalisation et de maintenance pour les aéroports. Il est cependant possible de prévoir pour ces derniers des objets caractéristiques destinés à fournir des signatures caractéristiques au capteur 2 du dispositif selon l'invention. Ces objets caractéristiques peuvent être par exemple constitués de panneaux d'aluminium. Le coût de ces derniers se présente encore comme un investissement supportable pour tous les aéroports.

Les objets sont de préférence au sol et immobiles, cependant, ils pourraient être aéroportés ou mobiles au sol, notamment pour constituer un guidage dynamique de l'aéronef.

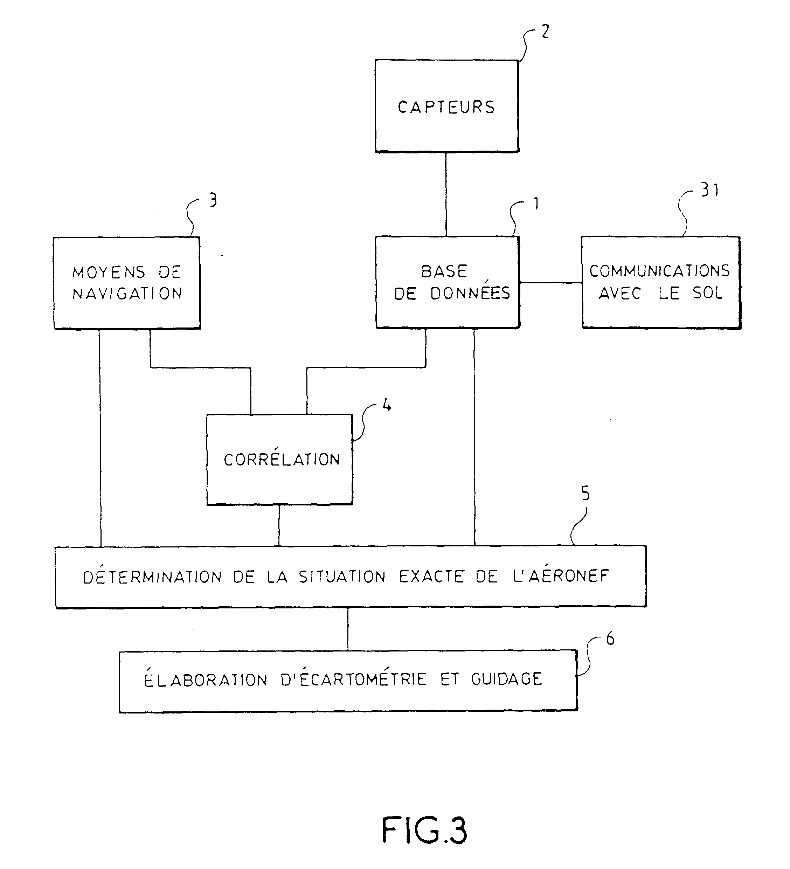

La figure 3 présente le synoptique d'un mode de réalisation d'un dispositif selon l'invention analogue à celui de la figure 1 mais comprenant en plus des moyens de communication avec le sol 31 reliés à la base de données 1. Cela permet notamment, au lieu de faire un enregistrement préalable de toutes les signatures dans la base de données 1, de faire un enregistrement par exemple par transmission hertzienne lorsque la destination finale de l'aéronef est connue. L'envoi de cette façon par les aéroports des signatures et positions de leurs objets caractéristiques évite notamment d'avoir recours à une trop grande base de données, ces informations n'étant pas stockées en permanence.

Le dispositif selon l'invention constitue une chaîne indépendante de calcul de position d'un aéronef et permet donc de rendre plus sûre la position fournie par le système de navigation et cela même pour des opérations d'atterrissage prévues sur des pistes d'aéroports non équipés d'aides radioélectriques. Cela autorise alors des opérations d'atterrissage sur ces pistes par n'importe quels temps, notamment lors de mauvaises conditions météorologiques.

Enfin, du fait que ce dispositif constitue une chaîne indépendante de calcul de position d'un aéronef il peut être adjoint à une chaîne primaire d'aide à l'atterrissage, du type ILS ou MLS par exemple, pour renforcer la sécurité des opérations d'atterrissage. Cela peut notamment être réalisé par l'utilisation des informations d'écartométrie par rapport à une trajectoire théorique.

## Revendications

1. Dispositif d'aide à l'atterrissage d'un aéronef (1), caractérisé en ce qu'il comprend au moins :
- une base de données (1) comportant les signatures et les positions d'objets (22, 23, 24) ;
- des moyens de navigation (3), définissant la localisation de l'aéronef (21) caractérisé en ce qu'il comprend
- un capteur acquérant les signatures des objets (22, 23, 24) ;
- des moyens de corrélation (4) reliés à la base de données (1), au capteur (2) et aux moyens de navigation (3) définissant les angles de sites et de gisement sous lesquels les objets (22, 23, 24) sont vus par le capteur (2) ;
- des moyens (5) de détermination de la situation exacte de l'aéronef (21) reliés aux moyens de navigation (3), au capteur (2) et à la base de données (1).

2. Dispositif selon la revendication 1, caractérisé en ce qu'il comporte des moyens (6) d'élaboration d'écartométrie et de guidage de l'aéronef (21) reliés aux moyens (5) de détermination de la situation exacte de l'aéronef.

3. Dispositif selon l'une quelconque des revendications précédentes, caractérisé en ce qu'un capteur (2) est un radar de météorologie.

4. Dispositif selon l'une quelconque des revendications précédentes, caractérisé en ce qu'un capteur est un radar à onde millimétrique.

5. Dispositif selon l'une quelconque des revendications précédentes, caractérisé en ce que les objets sont placés à proximité d'un aéroport.

6. Dispositif selon l'une quelconque des revendications précédentes, caractérisé en ce que les moyens (5) de détermination de la situation exacte de l'aéronef (21) définissent la situation par une méthode de triangulation à partir de trois signatures correspondant à trois objets (22, 23, 24).

7. Dispositif selon la revendication 2, caractérisé en ce que les moyens (6) d'élaboration d'écartométrie et de guidage de l'aéronef élaborent des informations d'écartométrie par rapport à une trajectoire théorique, puis des informations de guidage pour rejoindre cette trajectoire théorique à partir des informations du point d'entrée de l'aéronef sur la piste et des informations d'atterrissage contenues dans la base de données (1).

8. Dispositif selon la revendication 2, caractérisé en ce que les moyens de corrélation (4), les moyens (5) de détermination de la situation exacte de l'aéronef et les moyens (6) d'élaboration d'écartométrie et de guidage sont contenus dans un même calculateur.

9. Dispositif selon l'une quelconque des revendications précédentes, caractérisé en ce que la base de données (1) est reliée à des moyens de communication avec le sol (31).

10. Dispositif selon la revendication 9, caractérisé en ce que les signatures et position des objets (22, 23, 24) sont enregistrées dans la base de données par transmission hertzienne depuis l'aéroport d'approche de l'aéronef (21).

11. Dispositif selon la revendication 2 caractérisé en ce que les informations d'écartométrie par rapport à une trajectoire théorique servent à sécuriser une chaîne primaire d'atterrissage.

## Patentansprüche

1. Vorrichtung zur Unterstützung der Landung eines Luftfahrzeugs (1), dadurch gekennzeichnet, daß sie wenigstens umfaßt:
- eine Datenbank (1), die die Kennzeichen und Positionen der Objekte (22, 23, 24) enthält;
- einen Aufnehmer, der die Kennzeichen der Objekte (22, 23, 24) aufnimmt;
- Navigationsmittel (3), die den Ort des Luftfahrzeugs (21) bestimmen; dadurch gekennzeichnet, daß sie
- Korrelationsmittel (4), die mit der Datenbank (1), dem Aufnehmer (2) und den Navigationsmitteln (3) verbunden sind und den Höhen- und den Seitenwinkel bestimmen, unter denen die Objekte (22, 23, 24) von dem Aufnehmer (2) gesehen werden; und
- Mittel (5) zur Bestimmung der genauen Lage des Luftfahrzeugs (21) umfaßt, die mit den Navigationsmitteln (3), dem Aufnehmer (2) und der Datenbank (1) verbunden sind.

2. Vorrichtung nach Anspruch 1, dadurch gekennzeichnet, daß sie Mittel (6) zur Ermittlung des Abstands und zur Lenkung des Luftfahrzeugs (21) umfaßt, die mit den Mitteln (5) zur Bestimmung der genauen Lage des Luftfahrzeugs verbunden sind.

3. Vorrichtung nach einem der vorhergehenden Ansprüche, dadurch gekennzeichnet, daß der Aufnehmer (2) ein Wetterradar ist.

4. Vorrichtung nach einem der vorhergehenden Ansprüche, dadurch gekennzeichnet, daß der Aufnehmer (2) ein Millimeterwellen-Radar ist.

5. Vorrichtung nach einem der vorhergehenden Ansprüche, dadurch gekennzeichnet, daß die Objekte in der Nähe eines Flughafens angeordnet sind.

6. Verfahren nach einem der vorhergehenden Ansprüche, dadurch gekennzeichnet, daß die Mittel (5) zur Bestimmung der genauen Lage des Luftfahrzeugs (21) die Lage mittels eines Triangulationsverfahrens ausgehend von den drei Kennzeichen bestimmen, die den drei Objekten entsprechen (22, 23, 24).

7. Verfahren nach Anspruch 2, dadurch gekennzeichnet, daß die Mittel (6) zur Ermittlung des Abstand und zur Lenkung des Luftfahrzeugs Informationen über den Abstand zu einer theoretischen Trajektorie ermitteln und danach Lenkungsinformationen ermitteln, um die theoretische Trajektorie ausgehend von Informationen über den Einflugpunkt des Luftfahrzeugs auf der Landebahn und Landeinformationen, die in der Datenbank (1) enthalten sind, wieder zu erreichen.

8. Verfahren nach Anspruch 2, dadurch gekennzeichnet, daß die Korrelationsmittel (4), die Mittel (5) zur Bestimmung der genauen Lage des Luftfahrzeugs und die Mittel (6) zur Ermittlung des Abstands und zur Lenkung im gleichen Rechner enthalten sind.

9. Vorrichtung nach einem der vorhergehenden Ansprüche, dadurch gekennzeichnet, daß die Datenbank (1) mit Mitteln (31) zur Kommunikation mit dem Boden verbunden sind.

10. Vorrichtung nach Anspruch 9, dadurch gekennzeichnet, daß die Kennzeichen und die Position der Objekte (22, 23, 24) mittels Funkübertragung von dem Flughafen der Ankunft des Luftfahrzeugs (21) aus in die Datenbank eingeschrieben werden.

11. Vorrichtung nach Anspruch 2, dadurch gekennzeichnet, daß die Informationen über den Abstand von einer theoretischen Trajektorie dazu dienen, eine primäre Landungskette abzusichern.

## Claims

1. Aircraft landing aid device (1), characterized in that it comprises at least:
- one database (1) comprising the signatures and the positions of objects (22, 23, 24);
- means of navigation (3), defining the location of the aircraft (21), characterized in that it comprises
- a sensor capturing the signatures of the objects (22, 23, 24);
- correlation means (4) linked to the database (1), to the sensor (2) and to the means of navigation (3) defining the angles of elevation and of bearing at which the objects (22, 23, 24) are viewed by the sensor (2);
- means (5) for determining the exact situation of the aircraft (21) and which are linked to the means of navigation (3), to the sensor (2) and to the database (1).

2. Device according to Claim 1, characterized in that it comprises means (6) for computing deviation measurements and for guiding the aircraft (21) and which are linked to the means (5) for determining the exact situation of the aircraft.

3. Device according to any one of the preceding claims, characterized in that a sensor (2) is a weather radar.

4. Device according to any one of the preceding claims, characterized in that a sensor is a millimetre wave radar.

5. Device according to any one of the preceding claims, characterized in that the objects are placed in the vicinity of an airport.

6. Device according to any one of the preceding claims, characterized in that the means (5) for determining the exact situation of the aircraft (21) define the situation by a method of triangulation based on three signatures corresponding to three objects (22, 23, 24).

7. Device according to Claim 2, characterized in that the means (6) for computing deviation measurements and for guiding the aircraft compute information regarding deviation measurements with respect to a theoretical trajectory, and then guidance information for joining up with this theoretical trajectory from information regarding the point of entry of the aircraft onto the runway and landing information contained in the database (1).

8. Device according to Claim 2, characterized in that the correlation means (4), the means (5) for determining the exact situation of the aircraft and the means (6) for computing deviation measurements and for guidance are contained in the same computer.

9. Device according to any one of the preceding claims, characterized in that the database (1) is linked to means of communication with the ground (31).

10. Device according to Claim 9, characterized in that the signatures and position of the objects (22, 23, 24) are recorded in the database by radio transmission from the airport of approach of the aircraft (21).

11. Device according to Claim 2, characterized in that the information regarding deviation measurements with respect to a theoretical trajectory serves to make secure a primary landing facility.
